# EUROPEAN PATENT SPECIFICATION

(11) **EP 0 331 599 B1**
(45) Date of publication and mention of the grant of the patent: **15.06.1994**
(21) Application number: 89500020.6
(22) Date of filing: 28.02.1989
(51) Int. Cl.: H01M 4/80, H01M 4/66, H01M 4/26, H01M 4/32, H01M 4/62

(54) **Process for obtaining electrodes with a non-woven support of nickel or nickel alloy fibres**
Verfahren zur Herstellung von Elektroden aus nichtgewebten Fibergefügen aus Nickel oder einer Nickellegierung.
Procédé de préparation d'électrodes avec un support fibreux en nickel ou en un alliage de nickel non tissé

(30) Priority: 04.03.1988 ES 8800663
(43) Date of publication of application: 06.09.1989
(73) Proprietor: SOCIEDAD ESPANOLA DEL ACUMULADOR TUDOR, S.A., E-28027 Madrid (ES)
(72) Inventor: Lopez-Doriga Lopez-Doriga, Juan Antonio, ES-28003 Madrid (ES)
(74) Representative: Gomez-Acebo y Pombo, José Miguel

(56) References cited:
- EP-A- 0 185 830
- DE-A- 2 418 742
- US-A- 4 251 603
- PATENT ABSTRACTS OF JAPAN, vol. 10, no. 65 (E.388)[2122], 14th March 1986; & JP-A-60 216 452 (YUASA DENCHI K.K.) 29-10-1985
- IDEM
- PATENT ABSTRACTS OF JAPAN, vol. 10, no. 117 (E-400)[2174], 2nd May 1986; & JP-A-60 250 556 (YUASA DENCHI K.K.) 11-12-1985
- PATENT ABSTRACTS OF JAPAN, vol. 11, no. 351 (E-557)[2798], 17th November 1987; & JP-A-62 128 448 (YUASA BATTERY CO., LTD) 10-06-1987
- PATENT ABSTRACTS OF JAPAN, vol. 10, no. 58 (E-386)[2115], 7th March 1986; & JP-A-60 211 770 (NIHON DENCHI K.K.) 24-10-1985
- PATENT ABSTRACTS OF JAPAN, vol. 9, no. 280 (E-356)[2003], 8th November 1985; & JP-A-60 124 368 (MATSUSHITA DENKI SANGYO K.K.) 03-07-1985
- CHEMICAL ABSTRACTS, vol. 96, no. 6, February 1982, page 201, abstract no. 38385z, Columbus, Ohio, US; & JP-A-81 40 468 (MATSUSHITA ELECTRIC INDUSTRIAL CO., LTD) 21-09-1981

## Description

This invention refers to a process for obtaining electrodes, especially applicable to electric batteries, which have a base comprising a non-woven support of nickel or nickel alloy fibres, electrolytically cobalt coated, to which a paste of active materials has been by hand or automatically applied.

Concretely, this invention refers to electrodes whose formation process is initiated with a polarity inversion phase respect to the charge

### State-of-the-art

Nickel-cadmium rechargeable alkaline galvanic elements have been known for some time. Generally speaking, these elements include a rechargeable cadmium anode, a nickel oxide cathode and an alkaline electrolyte, such as an aqueous potassium hydroxide solution.

One of the main requirements of high rate Ni/Cd elements is that the electrodes must have a large active surface and small electric resistance in order to obtain satisfactory discharges at high current intensities. Consequently, compared with the traditional technology of pocket plates, sinterised nickel powder plates offered greatly improved high power performance, due to their highly porous structure, in whose pores the active material was impregnated (see GB-PS 491,498 and US-PS 3,214,255 for example).

Studies have also been carried out applying a paste to metal fibrous substrates or also to graphite or nickel-coated plastic substrates; the main composition of this paste is nickel or cadmiun hydroxide, depending on whether it concerns a positive or negative plate (US-PS 4,574,096).

In order to improve the performance of such pasted electrodes, cobalt-plating of the porous substrates has been considered in the japanese patents JP-A 60-216452, JP-A 60-211770 and JP-A 60-250556, before applying the active material. This process is claimed to improve active material utilization and life performance due to the suppression of active material exfoliation.

The electrodes have a base comprising a non-woven support of nickel or nickel alloy fibres, cobalt-coated electrolytically. Said base has variable porosity, and on its cobalt deposit a paste has been applied, mainly made up of nickel hydroxide or cadmium oxide.

The advantage of using a non-woven nickel or nickel alloy support consists of increasing the conductivity and hence reducing the internal resistance. In this way, it is possible to use supports with high porosity and consequently to - reach high electrode charge levels with active material.

Thus, this invention improves the adherence in pasted electrodes of the active material to the substrate, which has been previously cobalt-plated, and formed, as defined in Claim 1 thereby achieving a better efficiency of the active material and improving the performance of the electrodes in cycle life. Also, with the use of certain additives in the formulations of the pastes, improved conductivity and mechanical resistance of the electrodes are also achieved.

### Detailed description of the invention.

According to this invention is provided a process for obtaining electrodes with a non-woven nickel or nickel alloy fibre support with a porosity between 80% and 98% of its total volume, preferably between 85% and 95%, by means of the manual or automatic application of a paste whose principal component is nickel hydroxide for positive electrodes or cadmium oxide for negative ones on a substrate that has previously been cobalt-plated. In this process prior to the formation of both electrodes in the cell, a polarity inversion with respect to the charging step of the formation is applied at a current intensity of 0.1 C to 0.3 C A, being "C" the electrode capacity, for 30 to 60 minutes and then the formation itself is carried out, charging both electrode at the same current intensity of 0.1 C to 0.3 C A for 10 to 24 hours.

According to a preferred aspect, the fibres making up the said non-woven support have an average diameter of 5 to 30 »m, preferably from 15 to 25 »m.

According to another preferred aspect of this invention, the cobalt coating is 1 to 10 »m. thick, preferably from 3 to 7 »m, applied by cathodic polarisation of the non-woven nickel or nickel alloy support, in a cobalt salt solution which has anions non reducible in the said conditions, for example, chlorides, sulphates and the like and boric acid.

In accordance with a preferred aspect of the method for obtaining the electrodes according to the invention, current intensities of 15 to 250 A/m² of electrode are applied and the duration of the electrolysis, which depends on the desired intensity and thickness of the cobalt coating, generally ranges between 5 and 30 mins.

According to another preferred aspect of the invention, a paste is applied to the non-woven nickel or nickel alloy support, electrolytically cobalt-coated; the main component of the said paste is nickel hydroxide or cadmium oxide, to obtain the respective positive or negative electrodes. These electrodes offer an improvement over the electrical performance in cycles, and also grip the active material on the base better than with bases non cobalt coated.

According to this invention, the paste is applied manually or automatically in a second stage on the base made of the non-woven, very porous nickel or nickel alloy cobalt-coated support; in a third stage, the base treated in this way is compressed after drying, to achieve the final thickness desired which has the suitable mechanical features for assembling galvanic elements.

According to another preferred aspect of this invention, the main component of the paste, used to coat the positive electrodes, is nickel hydroxide in a proportion of 75 to 95% in weight, obtained by precipitating a saturated nickel sulphate solution with alkaline hydroxide, such as sodium hydroxide, at a temperature of 20 to 30°C.

According to another preferred aspect of this invention,this paste can contain one or several of the following components, improving, in each given case, the conductivity of the plate formed and, if relevant, binding materials which provide the plates formed with mechanical resistance, in the following ponderal proportions :
Graphite: from 0 to 15% in weight
Cobalt powder: from 0 to 3% in weight
Cadmium powder: from 0 to 5% in weight
Cellulose derivatives: carboxymethylcellulose, hydroxypropylmethylcellulose: from 0 to 2% in weight.
PTFE powder: from 0 to 2% in weight.

According to another preferred aspect of this invention, to prepare the paste all its constituents are combined by mixing, and water or a mixture of water-alcohol is added, like methanol, ethanol, n- or iso-propanol and the like, preferably however water-ethanol, in a proportion of up to 1:1, so that the solid components account for 50 or 70 % in weight of the total.

According to another preferred aspect of this invention, in the case of the negative paste, the fundamental component is cadmium oxide in a proportion of 90 to 99% in weight, preferably from 92 to 97% in weight, being able to have one or several of the following additives, in the proportions indica - ted :
Cadmium powder: from 0 to 5% in weight
Cellulose derivatives: from 0 to 2% in weight
PTFE powder: from 0 to 2% in weight
Ascorbic acid: from 0 to 1% in weight.

According to another preferred aspect of this invention, after mixing the solid components, water or a water-alcohol mixture is added, such as methanol, ethanol n- or isopropanol and the like, in a proportion of up to 1:1, so that the solid components comprise 50% or up to 80% in weight of the total weight.

According to a preferred embodiment of this invention, the formation of batteries made with fibre electrodes obtained according to previous methods, takes place according to a special process, in order to obtain better adherence of the active material to the nickel fibre substrate. This is achieved through the partial oxidation of the cobalt coating during the formation process. This comprises a first charge with the polarity inverted with respect to electrode charging, followed by another with the correct polarity for charging, both performed with a potassium hydroxide solution with a concentration between 10 and 40 %. This first inverted charge takes place at an intensity between 0.1 and 0.3 times the rated capacity of the battery for 30 to 60 minutes. The battery is discharged on a resistance and charged, this time with the correct polarity, at the same intensity for an overall time which can range between 10 and 24 hours, as the case may be.

Following the formation process disclosed above, the electrodes maintain their capacity during the charging and discharging cycles to which the battery is subjected in use. This is due to the fact that with the manufacturing process disclosed, the active material adheres better to the nickel fibre substrate, thereby avoiding the material coming away during the charging and discharging cycles of the battery.

This invention is explained below in greater detail, as a preferential example of embodiment, but which does not limit its scope in any way.

### Example

A positive electrode was prepared with an area of 25 cm² and 2 mm thick with a non-woven nickel support, with 95% porosity, which was cobalt-coated by cathodic polarization in a bath of 250 g/l of CoSO₄, 45 g/l of CoCl₂, and 35 g/l of boric acid at a temperature of 60°C and a cathodic current density of 200 A/m² for 7 minutes.

It was then hand-pasted with a mixture containing 4.8 g of nickel hydroxide, 0.56 g of graphite, 0.14 gr of cobalt powder, 0.08 g of PTFE (Polytetrafluoroethylene) 4 ml of a water-ethanol mixture in a proportion of 1:1. Sufficient pressure as then applied to reduce the thickness of the electrode to 1 mm.

To prepare a negative electrode, a similar non-woven support was used, measuring 25 cm² by 1.5 mm thick and with 95% porosity. The electrolytic cobalt coating took place in the way mentioned hereinabove.

The negative paste was prepared by mixing 3.6 g. of cadmium oxide, 0.12 g of cadmium, 0.06 g of PTFE, 0.02 g of ascorbic acid and 1.6 ml of a water-ethanol mixture in a proportion of 1:1. After pasting the non-woven nickel support with it, it was compressed and an electrode 0.7 mm thick was obtained.

Both electrodes were placed in a 24% potassium hydroxide solution and after two hours' impregnation an inverse charge took place at 100 mA for 30 minutes, and then a normal charge of 16 h at 100 mA. The capacity of the element thus obtained was 0.78 Ah. After 30 discharge cycles at 0.15A and 16 h charge at 0.08 A, the capacity of the element was 0.74 Ah.

## Claims

1. Process for obtaining a negative and a positive electrode each having a non-woven nickel or nickel alloy fibre support with a porosity between 80% and 98% of its total volume, preferably between 85% and 95%, by means of manual or automatic application of a paste on said supports to be followed by formation of both electrodes, wherein said support of each electrode is cobalt plated prior to the application of the paste and the principal component is nickel hydroxide for the positive electrode and cadmium oxide for the negative one, characterized by the fact that, prior to the formation of both electrodes in a cell for each of said positive and negative electrode a polarity inversion with respect to the charging step of the formation is applied at a current intensity of 0.1 C to 0.3 C A, being "C" the electrode capacity, for 30 to 60 minutes and then the formation itself is carried out, charging both electrodes at the same current intensity of 0.1 C to 0.3 C A for 10 to 24 hours.

2. Process for obtaining electrodes according to claim 1, characterized by the fact that the cobalt coating of the substrate has a thickness of 1 to 10 »m, preferably 3 to 7 »m and is carried out by cathodic polarization of this in a solution of a cobalt salt containing anions that are non-reducible under these conditions, such as chlorides and sulphates, and boric acid, applying current densities of 15 to 250 A/m² of electrode for 15 to 30 minutes.

3. Process for obtaining negative electrodes according to claims 1 and 2, characterized by the fact that the principal component of the paste is cadmium oxide in the proportion of 90% to 99% by weight, preferably 92% to 97%, and also because it contains 0% to 5% by weight of cadmium, 0% to 2% of cellulose derivatives, preferably carboxymethylcellulose or hydroxpropylcellulose, 0% to 2% by weight of PTFE (polytetrafluoroethylene) powder and 0% to 1% by weight of ascorbic acid.

4. Process for obtaining positive electrodes according to claims 1 and 2, characterized by the fact that the principal component of the paste is nickel hydroxide in the proportion of 75% to 95% by weight and also because it contains 0% to 15% by weight of graphite, 0% to 3% by weight of cobalt powder, 0% to 5% by weight of cellulose derivatives, preferably carboxymethylcellulose or hydroxpropylmethylcellulose, and 0% to 2% by weight of PTFE powder.

5. Process for obtaining positive and negative electrodes according to claims 1 to 4, characterized by the fact that the paste contains a liquid component which could be water or water-alcohol mixtures, preferably water-ethanol, in a proportion of up to 1:1 with respect to the solid components.

## Patentansprüche

1. Verfahren zum Erhalt einer negativen und einer positiven Elektrode, die jeweils einen Faservliesträger aus Nickel oder einer Nickellegierung mit einer Porosität von 80 bis 98%, vorzugsweise 85 bis 95%, seines Gesamtvolumens aufweisen, mittels manueller oder automatischer Aufbringung einer Paste auf die genannten Träger und anschließender Bildung der beiden Elektroden, worin der genannte Träger einer jeden Elektrode vor der Aufbringung der Paste mit Kobalt plattiert ist und der Hauptbestandteil Nickelhydroxid für die positive Elektrode und Kadmiumoxid für die negative sind,
dadurch **gekennzeichnet,** daß
vor der Bildung der beiden Elektroden in einer Zelle für jede der genannten positiven und negativen Elektrode eine Polaritätsinversion bezüglich der Aufladungsstufe der Bildung bei einer Stromintensität von 0,1 C bis 0,3 C A, wobei "C" die Elektrodenkapazität ist, 30 bis 60 Minuten lang angewandt und dann die Bildung selbst durchgeführt werden, wobei beide Elektroden bei derselben Stromintensität von 0,1 C bis 0,3 C A 10 bis 24 h lang aufgeladen werden.

2. Verfahren zum Erhalt der Elektroden gemäß Anspruch 1,
dadurch **gekennzeichnet**, daß
der Kobaltüberzug des Substrats eine Dicke von 1 bis 10 »m, vorzugsweise 3 bis 7 »m, aufweist und durch kathodische Polarisation davon in einer Lösung eines Kobaltsalzes durchgeführt wird, die Anionen, die unter diesen Bedingungen nicht-reduzierbar sind, wie Chloride und Sulfate, und Borsäure enthält, wobei man Stromdichten von 15 bis 250 A/m² Elektrode 15 bis 30 Minuten lang anwendet.

3. Verfahren zum Erhalt negativer Elektroden gemäß Ansprüchen 1 und 2,
dadurch **gekennzeichnet,** daß
der Hauptbestandteil der Paste Kadmiumoxid im Anteil von 90 bis 99 Gew.%, vorzugsweise 92 bis 97 Gew.%, ist und auch 0 bis 5 Gew.% Kadmium, 0 bis 2 Gew.% Cellulosederivate, vorzugsweise Carboxymethylcellulose oder Hydroxypropylcellulose, 0 bis 2 Gew.% PTFE-Pulver und 0 bis 1 Gew.% Ascorbinsäure enthält.

4. Verfahren zum Erhalt positiver Elektroden gemäß Ansprüchen 1 und 2,
dadurch **gekennzeichnet**, daß
der Hauptbestandteil der Paste Nickelhydroxid im Anteil von 75 bis 95 Gew.% ist und auch 0 bis 15 Gew.% Graphit, 0 bis 3 Gew.% Kobalt-Pulver, 0 bis 5 Gew.% Cellulosederivate, vorzugsweise Carboxymethylcellulose oder Hydroxypropylmethylcellulose, und 0 bis 2 Gew.% PTFE-Pulver enthält.

5. Verfahren zum Erhalt positiver und negativer Elektroden gemäß Ansprüchen 1 bis 4,
dadurch **gekennzeichnet**, daß
die Paste einen flüssigen Bestandteil, der Wasser oder Wasser-Alkohol-Mischungen, vorzugsweise Wasser-Ethanol, sein kann, in einem Anteil bis zu 1:1, bezogen auf die festen Bestandteile, enthält.

## Revendications

1. Procédé pour obtenir des électrodes négative et positive ayant chacune un support en fibres de nickel ou d'alliage de nickel non tissées, dont la porosité est comprise entre 80% et 98% de son volume total, et est de préférence comprise entre 85% et 95%, par application manuelle ou automatique d'une pâte sur lesdits supports puis par formation des deux électrodes, dans lequel ledit support de chaque électrode est plaqué de cobalt avant l'application de la pâte et dans lequel le constituant principal est l'hydroxyde de nickel pour l'électrode positive et l'oxyde de cadmium pour la négative, caractérisé en ce que, avant formation des deux électrodes dans une cellule pour chacune desdites électrodes positive et négative, on applique une inversion de polarité par rapport à l'étape de charge effectuée lors de la formation, avec une intensité de courant de 0,1 C à 0,32 C A, où "C" est la capacité de l'électrode, pendant 30 à 60 minutes, puis en ce qu'on effectue la formation elle-même en chargeant les deux électrodes avec la même intensité de courant, de 0,1 C à 0,3 C A, pendant 10 à 24 heures.

2. Procédé pour obtenir des électrodes selon la revendication 1, caractérisé en ce que le revêtement de cobalt du substrat a une épaisseur de 1 à 10 »m, et de préférence, de 3 à 7 »m, et en ce qu'on l'applique en le soumettant à une polarisation cathodique dans une solution d'un sel de cobalt contenant des anions qui ne sont pas réductibles dans ces conditions, tels que des chlorures et des sulfates, et d'acide borique, en appliquant des densités de courant de 15 à 250 A/cm² d'électrode pendant 15 à 30 min.

3. Procédé pour obtenir des électrodes négatives selon les revendications 1 et 2, caractérisé en ce que le constituant principal de la pâte est l'oxyde de cadmium dans une proportion de 90% à 99% en poids, et de préférence, de 92% à 97% et en ce qu'elle contient également de 0% à 5% en poids de cadmium, de 0% à 2% de dérivés de cellulose, de préférence, la carboxyméthyl cellulose ou l'hydroxypropyl cellulose, de 0% à 2% en poids d'une poudre de PTFE et de 0% à 1% en poids d'acide ascorbique.

4. Procédé pour obtenir des électrodes positives selon les revendications 1 et 2, caractérisé en ce que le constituant principal de la pâte est l'hydroxyde de nickel dans une proportion de 75% à 95% en poids, et en ce qu'elle contient également de 0% à 15% en poids de graphite, de 0% a 3% en poids de poudre de cobalt, de 0% à 5% en poids de dérivés de cellulose, de préférence, la carboxyméthyl cellulose ou l'hydroxypropylméthyl cellulose, et de 0% à 2% en poids d'une poudre de PTFE.

5. Procédé pour obtenir des électrodes positives et négatives selon les revendications 1 à 4, caractérisé en ce que la pâte contient un constituant liquide qui pourrait être de l'eau ou des mélanges d'eau-alcool, de préférence, d'eau-éthanol, dans une proportion allant jusqu'à 1:1 par rapport aux constituants solides.
